# EUROPEAN PATENT APPLICATION

(11) **EP 1 026 795 A2**
(43) Date of publication of application: **09.08.2000**
(21) Application number: 99308695.8
(22) Date of filing: 02.11.1999
(51) Int. Cl.: H01S 3/0941

(54) **Semiconductor laser-excitation solid-state laser oscillating device**

(30) Priority: 01.02.1999 JP 2369099
(71) Applicant: FANUC LTD, Minamitsuru-gun, Yamanashi 401-0597 (JP)
(72) Inventor: Karube, Norio, Machida-shi, Tokyo 194-0002 (JP); Iehisa, Nobuaki, Mishina-shi, Shizuoka, 411-0026 (JP); Satou, Masao, Room 14-308, FANUC Manshonharimomi,, Yamanashi, 401-0511 (JP)
(74) Representative: Billington, Lawrence Emlyn

(57) **Abstract**

A semiconductor laser-excitation solid-state laser oscillator capable of obtaining various output waveforms in accordance with a group configuration of semiconductor lasers used as an excitation source. A solid-state laser medium 3 for generating a laser beam 11 is arranged in an optical resonator composed of an output mirror 1 and a rear mirror 2. LD stacks are arranged to be divided into three groups 4, 5, 6 and connected to a control circuit 7. A central processing unit 8 with a memory 9 controls the semiconductor lasers of each group 4, 5, 6 independently. A type (pulse type or continuous-oscillation type) and characteristics (maximum driving current, maximum pulse width, maximum duty cycle, etc.) of the semiconductor lasers in each group 4, 5, 6 of LD stack are uniformed. By controlling the ON/OFF timing of the semiconductor lasers in each group 4, 5, 6, laser outputs of various waveforms can be obtained.

## Description

The present invention relates to a semiconductor laser-excitation solid-state laser oscillating device (a solid-state laser oscillating device using semiconductor lasers as excitation source, also called an LD-excitation solid-state laser oscillating device) for use in a laser beam machining apparatus, etc.

A semiconductor laser-excitation solid-state laser oscillating device having semiconductor lasers arranged around a solid-state laser medium such as YAG has advantages of high efficiency of oscillation as compared with a conventional one of a lamp excitation type, and has a compact size to lower a burden of maintenance, and therefore research and development of this device is carried on for widespread use in the industry.

Generally speaking, rising of a laser output of the solid-state laser oscillating device of light excitation system follows the input of excitation light with a considerable time lag. However, in the so-called high-output solid-state laser oscillating device excited by LD of kW class, a gain is sufficiently high and the time lag between an input of the excitation light and a rising of laser beam output is so small as to be actually neglected. The semiconductor laser to be used as an excitation light source falls into two types; a continuous oscillation type and a pulse type.

Corresponding to these two types of excitation sources, the output waveform obtained by the conventional solid-state laser oscillator excited by semiconductor laser is basically either of a pulse type or of a continuous oscillation type.

However, an output waveform obtained by the conventional semiconductor laser-excitation solid-state laser oscillating device has great restrictions and an improvement in this device has been desired. First, in the semiconductor laser-excitation solid-state laser oscillating device of the pulse type, the obtained output beam has a very narrow pulse width (for example, 0.4 msec) which poses a problem in practical use. In the case where the device of this type is to be applied to welding of aluminum, for example, a longer pulse (for example, 1 msec or more) is required. Therefore, the conventional solid-state laser oscillating device using the semiconductor laser of pulse type as the excitation source cannot be used for this purpose.

On the other hand, in the solid-state laser oscillating device using the semiconductor lasers of continuous-oscillation type as the excitation source, a laser output having a desired pulse width can be obtained by modulating driving current of the semiconductor lasers into a pulse shape. However, in this method the continuous output is interrupted, so that a surplus portion remains in the input energy to the semiconductor lasers of continuous-driving type. Accordingly, the average output of the solid-state laser oscillator decreases. To compensate this decrease, the number of arranged semiconductor lasers has to be increased, to make the device disadvantageous.

In addition to the above problem, there is a problem that it is difficult to design an output waveform in accordance with the application. In the case where a stepwise output waveform is required, for example, it is conventionally adopted a method in which the input current to the semiconductor lasers of pulse type is changed stepwise. In this case as well, the semiconductor lasers used as an excitation source do not take full advantage of their capability, so that a surplus portion remains in the input energy. Accordingly, the average output of the solid-state laser oscillator decreases. To compensate this decrease, the number of arranged semiconductor lasers has to be increased.

An object of the present invention is to improve a semiconductor laser-excitation solid-state laser oscillating device so as to obtain a desired output waveform by efficiently utilizing capability of semiconductor lasers used as an excitation source, thus enhancing industrial usability of the semiconductor laser-excitation solid-state laser oscillating device.

The present invention is applied to a semiconductor laser-excitation solid-state laser oscillating device comprising a solid-state laser medium arranged in an optical resonator, an excitation light source for laser-exciting the solid-state laser medium and a controller for controlling the excitation light source.

According to the basic feature of the present invention, the excitation light source includes semiconductor lasers divided into a plurality of groups and the controller controls the excitation light source so that on/off timing of the excitation light from the semiconductor lasers in at least one group are different from on/off timing of the semiconductor lasers in another group so as to obtain a laser output having a predetermined waveform from the solid-state laser medium.

In one typical case, all the semiconductor lasers in the groups are of pulse type. In this case, it is preferable that the semiconductor lasers in each group have the same maximum driving current, the same maximum pulse width and the same maximum duty cycle (the same characteristics in each group).

In another typical case, the semiconductor lasers in at least one group are of continuous-output type and the semiconductor lasers in the remaining groups are of pulse type. In this case, it is preferable that the semiconductor lasers in at least one group have the same maximum driving current, and the semiconductor lasers in the remaining groups have the same maximum driving current, the same pulse width and the same maximum duty cycle (the same characteristics in each group).

In the case where the semiconductor lasers used in each of the semiconductor laser groups have the same characteristics, the controller may control driving current, pulse width and repetition frequency of the pulse-type semiconductor lasers in at least two groups independently with respect to respective groups to settle leading edges of pulses of the excitation light.

In this case, assuming that N (N≥2) groups of pulse-type semiconductor lasers having pulse width of ΔT are provided, the controller may control the pulse-type semiconductor lasers in n-th group so that on-timing of the pulse-type semiconductor lasers in the n-th group delays substantially by nΔT with respect to on-timing of the pulse-type semiconductor lasers in the first group. With this arrangement, there remains no surplus of excitation input, so that an output having a substantially expanded pulse width can be obtained.

### BRIEF DESCRIPTION OF THE DRAWINGS

FIG. 1 is a schematic view showing an example of a semiconductor laser-excitation solid-state laser oscillating device according to the present invention;
FIG. 2 is a time chart showing control of semiconductor lasers and an output waveform according to a first embodiment;
FIG. 3 is a flowchart showing an outline of processing in the first embodiment;
FIG. 4 is a diagram showing a surplus in input energy in the conventional device for obtaining an output waveform equivalent to that in the first example;
FIG. 5 is a time chart for showing control of the semiconductor lasers and an output waveform according to a second embodiment;
FIG. 6 is a flowchart showing an outline of processing in the second embodiment;
FIG. 7 is a diagram showing a surplus in input energy in the conventional system for obtaining an output waveform equivalent to that in the second embodiment;
FIG. 8 is a time chart showing control of the semiconductor lasers and an output waveform according to a third embodiment;
FIG. 9 is a flowchart showing an outline of processing in the third embodiment; and
FIG. 10 is a graph representing a relationship between the number of groups and the obtained peak output and pulse width in the third example.

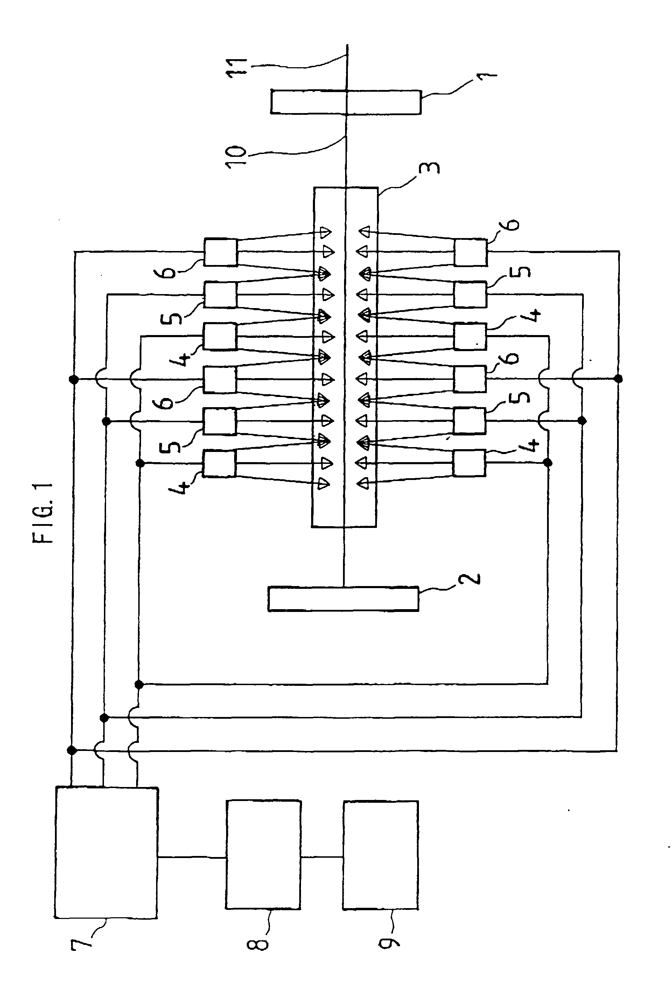

FIG. 1 is a schematic view showing a basic part of a semiconductor laser-excitation solid-state laser oscillating device according to an embodiment of the present invention. Referring to FIG. 1, a solid-state laser medium 3 is disposed in an optical resonator composed of an output coupler (partially reflective mirror) 1 and a rear mirror (totally reflective mirror) 2, and an appropriate number (twelve in this figure) of LD (laser diode) stacks are arranged around the laser medium 3. The solid-state laser medium 3 is, for example, a flat slab shaped Nd:YAG laser crystal. Although not shown in this figure, both end faces of the laser medium 3 are preferably cut obliquely with respect to the thickness direction so as to have an angle substantially meeting Brewster's condition. Sometimes, a rod shaped laser crystal is used.

Each of a total of twelve LD stacks has a predetermined number of semiconductor laser elements (generally, one or more LD elements) as a unit. Here, the LD stacks are divided into three groups denoted by reference numbers 4, 5 and 6. Hereinafter, these groups (semiconductor laser groups) are called a first group, a second group, and a third group in that order. Four LD stacks 4 constitute the semiconductor lasers of first group. Similarly, four LD stacks 5 constitute the semiconductor lasers of second group, and four LD stacks 6 constitute the semiconductor lasers of third group. The reason for distributed arrangement of four LD stacks of the same group is to stabilize the laser output. Other arrangements are permitted.

Each of the LD stacks of each group is connected to a control circuit 7 incorporating a power source. The control circuit 7 is further connected to a central processing unit (I/O built-in) 8 provided with a memory 9. In the memory 9, programs for controlling each semiconductor laser of each group in a later-described modes and related set values have been written. Although not shown in the figure, a control section composed of the control circuit 7, the central processing unit 8, and the memory 9 is provided, as necessary, with an operation section for executing the input of programs and parameters, edit, setting, and the like manually.

When the semiconductor lasers equipped in the LD stacks 4, 5 and 6 emit light by means of an input current from the control section, the solid-state laser medium 3 is laser-excited, so that a laser beam 10 is generated. The laser beam 10 is taken out via the output coupler (partially reflective mirror) 1, and is used as a laser output beam 11 for laser machining, for example. The light emitting progress on which the semiconductor lasers equipped in the LD stacks 4, 5 and 6 are caused to emit light will be described later.

For the semiconductor lasers equipped in the LD stacks 4, 5 and 6, their types (classification of pulse type and continuous oscillation type) and characteristics are uniformed for each semiconductor group to which they belong. The uniformed characteristics for the pulse type semiconductor laser are the maximum driving current, the maximum pulse width, and the maximum duty cycle. The uniformed characteristics for the continuous output type semiconductor laser are the maximum driving current.

The type (classification of pulse type and continuous oscillation type) and characteristics (maximum driving current, maximum pulse width, maximum duty cycle) of semiconductor laser of each group and the specific details of control are determined according to the waveform (the time progress pattern of power) desired as the laser beam output 11. The following is a description of the basic points of some examples.

### [First Embodiment]

### (Type and characteristics of each group)

- First group:: Continuous oscillation type; maximum driving current i₁
- Second group:: Pulse type; maximum driving current i₂; maximum pulse width ΔT; maximum duty cycle 1/6 ΔT
- Third group:: Pulse type; maximum driving current i₃; maximum pulse width 2ΔT; maximum duty cycle 1/6 ΔT

### (Control details)

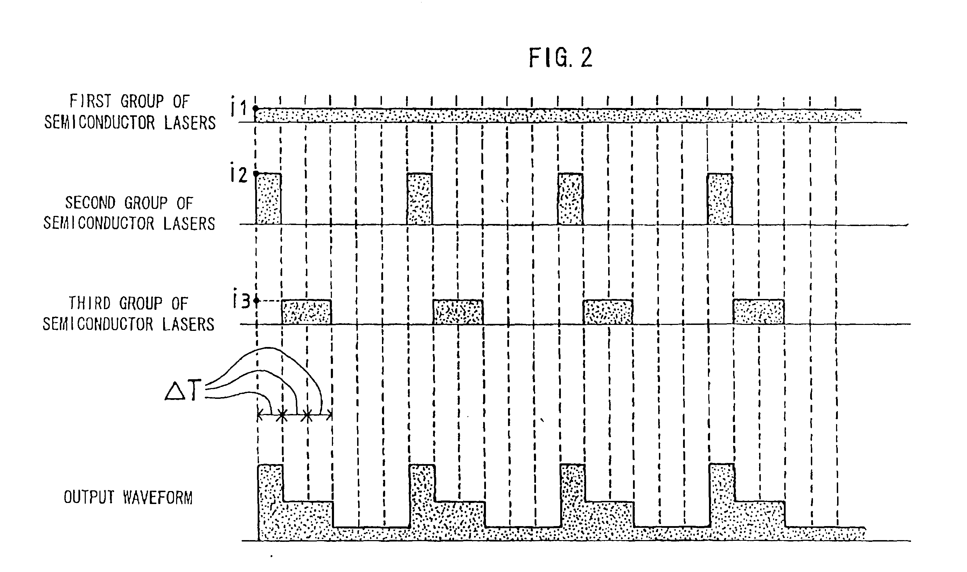

The input current to the semiconductor laser of each group is controlled according to a time chart of FIG. 2. Specifically, the continuous oscillation type semiconductor laser of the first group is continuously oscillated with the maximum driving current i₁. Also, the pulse type semiconductor laser of the second group is oscillated with the maximum driving current i₂ and the maximum pulse width ΔT, and the pulse type semiconductor laser of the third group is oscillated with the maximum driving current i₃ and the maximum pulse width 2ΔT.

As shown in the chart, control is carried out so that the ON timing shifts by ΔT to pulse-oscillate the second group and the third group one after another.

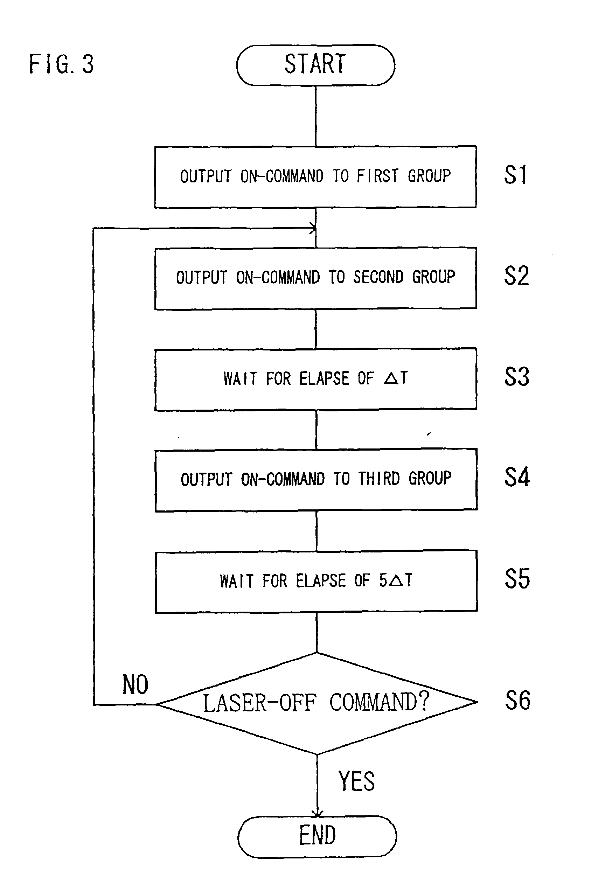

FIG. 3 is a flowchart showing the outline of processing performed by the central processing unit 8. The basic point of each step is as described below.

Step S1: The continuous oscillation of the semiconductor lasers belonging to the first group is turned ON (the driving current i₁ supply start command is outputted).

Step S2: Immediately after Step S1, the pulse oscillation of the semiconductor lasers belonging to the second group is turned ON (driving current i₂, pulse width ΔT).

Step S3: After ΔT has elapsed, the control proceeds to Step S4.

Step S4: The pulse oscillation of the semiconductor lasers belonging to the third group is turned ON (driving current i₃, pulse width 2ΔT).

Step S5: After 5ΔT has elapsed, the control proceeds to Step S6.

Step S6: The presence of laser output OFF command is checked. If the laser output OFF command has been given, the OFF command of the driving current i₁ of the semiconductor lasers belonging to the first group is issued, and the processing is ended. In other cases, the control returns to Step S2.

When such control is carried out, letting the number of semiconductor lasers belonging to the first, second, and third groups be g₁, g₂ and g₃, respectively, the current (first one cycle) inputted for laser excitation is given as described below. The ON time (oscillation start time) of the first group is taken as t=0.
t = from 0 to ΔT; g₁·i₁ + g₂·i₂
t = from ΔT to 3ΔT; g₁·i₁ + g₃·i₃
t = from 3ΔT to 6ΔT; g₁·i₁

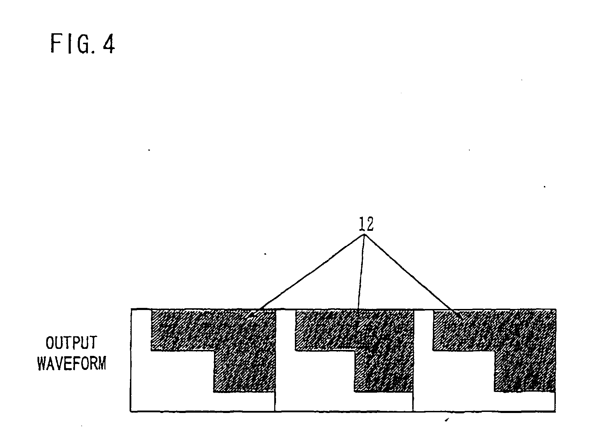

Given g₁ = g₂ = g₃, the obtained laser output is as shown at the bottom of the time chart of FIG. 2. Specifically, an output waveform (time progress of output) in which the pulse output components are superposed on the continuous output component can be obtained. If an attempt is made to obtain the output waveform equivalent to this by using the conventional system, a continuous oscillation type semiconductor laser is used, and it is modulated on the progress of the same waveform. In this case, an excess portion (hatched portion; the capability of semiconductor laser is not brought into play) 12 as shown in FIG. 4 is generated. Such an output waveform is very useful in laser beam machining of some kind.

### [Second Embodiment]

### (Type and characteristics of each group)

- First group:: pulse type; maximum driving current j₁; maximum pulse width ΔT/2; maximum duty cycle 1/6 ΔT
- Second group:: pulse type; maximum driving current j₂; maximum pulse width ΔT; maximum duty cycle 1/6 ΔT
- Third group:: pulse type; maximum driving current j₃; maximum pulse width 2ΔT; maximum duty cycle 1/6 ΔT

### (Control details)

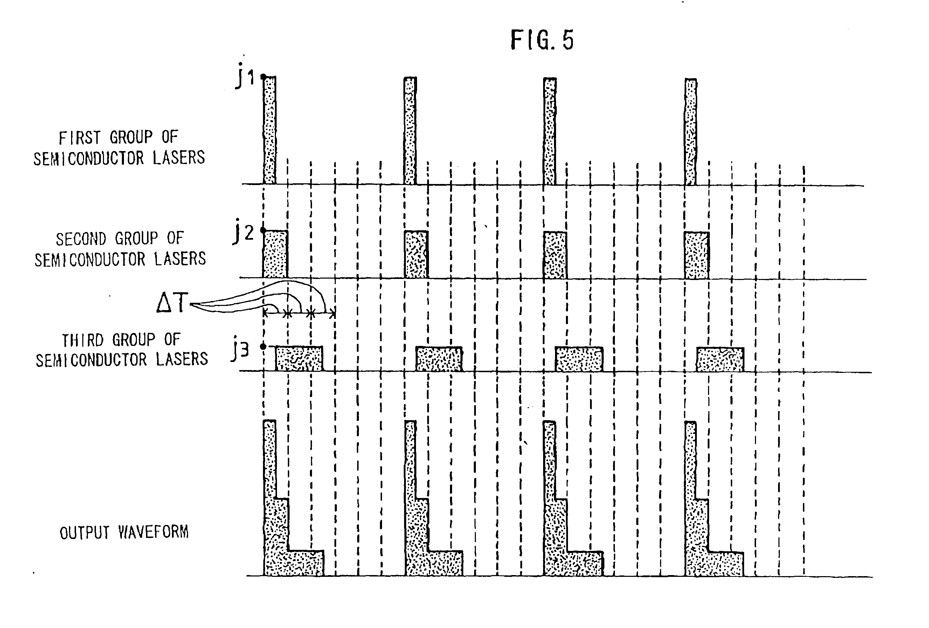

The input current to the semiconductor lasers of each group is controlled according to a time chart of FIG. 5. Specifically, the pulse type semiconductor laser of the first group is oscillated with the maximum driving current jᵢ and the maximum pulse width ΔT/2. The pulse type semiconductor laser of the second group is oscillated with the maximum driving current j₂ and the maximum pulse width ΔT, and the pulse type semiconductor laser of the third group is oscillated with the maximum driving current j₃ and the maximum pulse width 2ΔT.

As shown in the chart, the pulse oscillation of the first and second groups is turned ON at the same time, but control is carried out so that the ON timing of the third group shifts by ΔT/2 with respect to the first group (and second group).

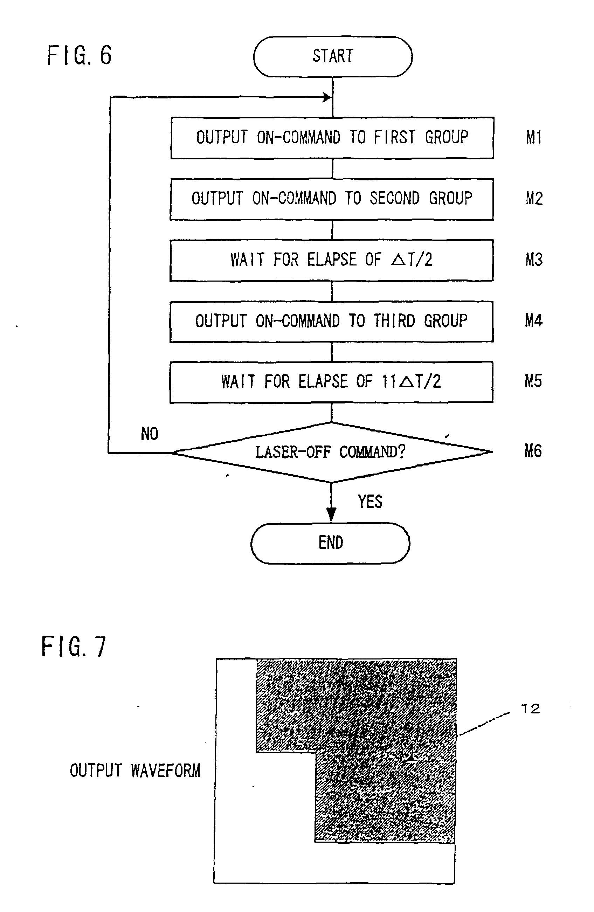

FIG. 6 is a flowchart showing the outline of processing performed by the central processing unit 8. The basic point of each step is as described below.

Step M1: The pulse oscillation of the semiconductor lasers belonging to the first group is turned ON (driving current j₁, pulse width ΔT/2).

Step M2: Immediately after Step Ml, the pulse oscillation of the semiconductor lasers belonging to the second group is turned ON (driving current j₂, pulse width ΔT).

Step M3: After ΔT/2 has elapsed, the control proceeds to Step M4.

Step M4: The pulse oscillation of the semiconductor lasers belonging to the third group is turned ON (driving current j₃, pulse width 2ΔT).

Step M5: After 11ΔT/2 has elapsed, the control proceeds to Step M6.

Step M6: The presence of laser output OFF command is checked. If the laser output OFF command has been given, the processing is ended. In other cases, the control returns to Step Ml.

When such control is carried out, letting the number of semiconductor lasers belonging to the first, second, and third groups be g₁, g₂ and g₃, respectively, the current (first one cycle) inputted for laser excitation is given as described below. The ON time (oscillation start time) of the first group is taken as t=0.
t = from 0 to ΔT/2; g₁·j₁ + g₂·j₂
t = from ΔT/2 to ΔT; g₂·j₂ + g₃·j₃
t = from ΔT to 5ΔT/2; g₃·j₃
t = from 5ΔT/2 to 6ΔT; 0

Given g₁ = g₂ = g₃, the obtained laser output is as shown at the bottom of the time chart of FIG. 5. Specifically, a stepwise pulse output waveform (time progress of output) in which the pulse output components of three groups are superposed one after another can be obtained. If an attempt is made to obtain the laser output equivalent to this by using the conventional system, a continuous oscillation type semiconductor laser is used, and it is modulated on the progress of the same waveform. In this case, an excess portion (hatched portion; the capability of semiconductor laser is not brought into play) 12 as shown in FIG. 7 is generated. Such an output waveform is also very useful in laser beam machining of some kind.

### [Third Embodiment]

### (Type and characteristics of each group)

- First group:: Pulse type; maximum driving current k₁; maximum pulse width ΔT; maximum duty cycle 1/6 ΔT
- Second group:: Pulse type; maximum driving current k₂; maximum pulse width ΔT; maximum duty cycle 1/6 ΔT
- Third group:: Pulse type; maximum driving current k₃; maximum pulse width ΔT; maximum duty cycle 1/6 ΔT

### (Control details)

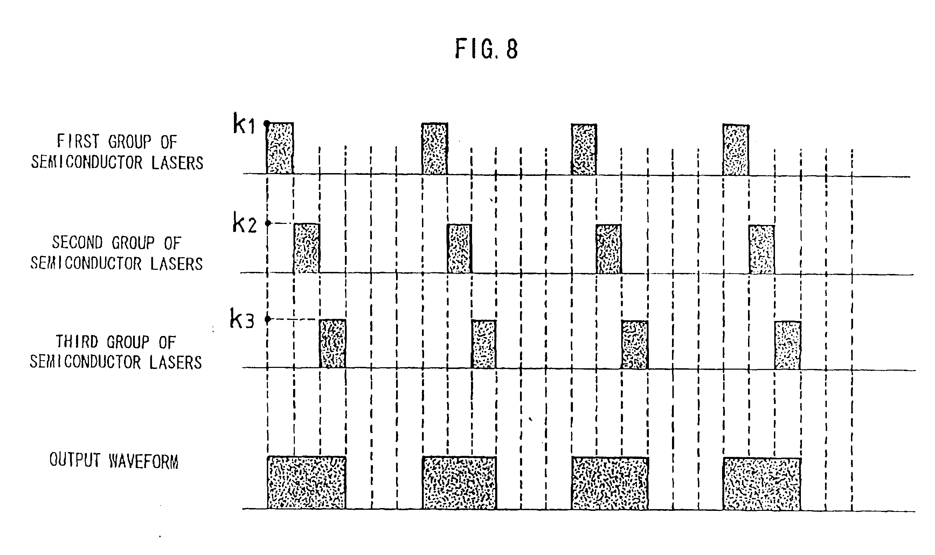

The input current to the semiconductor lasers of each group is controlled according to a time chart of FIG. 8. Specifically, the pulse type semiconductor laser of the first group is oscillated with the maximum driving current k₁ and the maximum pulse width ΔT. The pulse type semiconductor laser of the second group is oscillated with the maximum driving current k₂ and the maximum pulse width ΔT, and the pulse type semiconductor laser of the third group is oscillated with the maximum driving current k₃ and the maximum pulse width ΔT.

As shown in the time chart, control is carried out so that the ON timing of the first, second, and third groups shifts by ΔT.

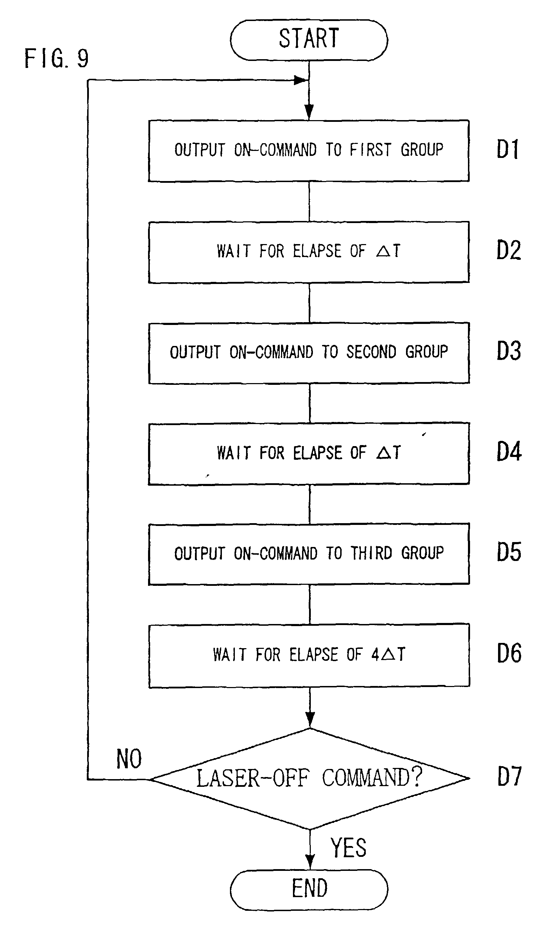

FIG. 9 is a flowchart showing the outline of processing performed by the central processing unit 8. The basic point of each step is as described below.

Step D1: The pulse oscillation of the semiconductor lasers belonging to the first group is turned ON (driving current k₁, pulse width ΔT).

Step D2: After ΔT has elapsed, the control proceeds to Step D3.

Step D3: The pulse oscillation of the semiconductor lasers belonging to the second group is turned ON (driving current k₂, pulse width ΔT).

Step D4: After ΔT has elapsed, the control proceeds to Step D5.

Step D5: The pulse oscillation of the semiconductor lasers belonging to the third group is turned ON (driving current k₃, pulse width ΔT).

Step D6: After 4ΔT has elapsed, the control proceeds to Step M7.

Step D7: The presence of laser output OFF command is checked. If the laser output OFF command has been given, the processing is ended. In other cases, the control returns to Step D1.

When such control is carried out, letting the number of semiconductor lasers belonging to the first, second, and third groups be g₁, g₂ and g₃, respectively, the current (first one cycle) inputted for laser excitation is given as described below. The ON time (oscillation start time) of the first group is taken as t=0.
t = from 0 to ΔT; g₁·k₁
t = from ΔT to 2ΔT; g₂·k₂
t = from 2ΔT to 3ΔT; g₃·k₃
t = from 3ΔT to 6ΔT; 0

Given g₁ = g₂ = g₃ and k₁ = k₂ = k₃, the obtained laser output is as shown at the bottom of the time chart of FIG. 8. Specifically, as a result of the sequential superposition of the pulse output components of three groups, a pulse output waveform (time progress of output) with a pulse width of 3 ΔT is obtained. Also, when g₁k₁ = g₂k₂ = g₃k₃, almost the same result (pulse output waveform with a pulse width of 3ΔT) is obtained.

For example, in order to design a solid-state laser oscillator excited by semiconductor laser with an average output of 1 kW, a case is considered in which an equal number of pulse type semiconductor lasers having characteristics of duty ratio 2% pulse width 0.4 msec, and cycling frequency 50 Hz are used for each group. The drive of the second group is delayed by 0.4 msec with respect to the drive of the first group, and the drive of the third group is delayed by 0.8 msec with respect to the drive of the first group.

If the number of semiconductor lasers for each group is controlled to keep a peak output of 16.7 kW, a solid-state laser oscillator excited by semiconductor laser with an average output of 1 kW, an effective duty ratio of 6%, a pulse width of 1.2 msec, and a cycling frequency of 50 Hz is realized.

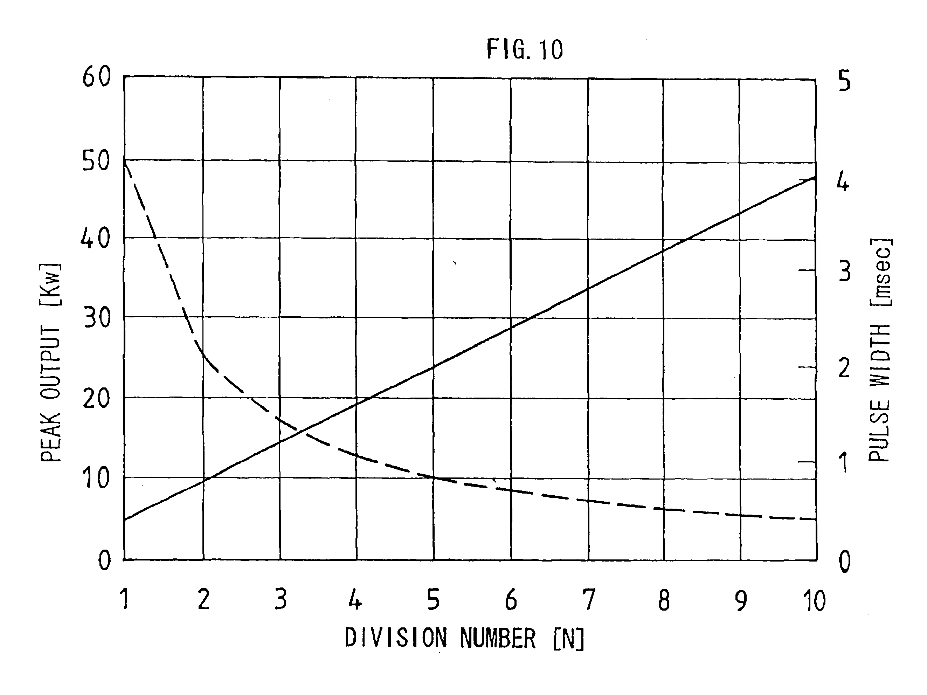

FIG. 10 is a graph representing a relationship between the group division number (number of groups) and the obtained peak output and pulse width in a case where a solid-state laser oscillator excited by semiconductor laser with an average output of 1 kW is composed by using an equal number of pulse type semiconductor lasers having the above-described same characteristics for each group. For example, when the division number is 10, a laser output can be obtained which is equivalent to the output in the case where pulse type semiconductor lasers with a pulse width of 4 msec, a duty ratio of 20%, and a cycling frequency of 50 Hz are assumed to be used. That is to say, the pulse width and the duty ratio become ten times, and the cycling frequency of 50 Hz is maintained (the cycling frequency becomes one tenth if considering on the basis of the number of ON/OFF operations of pulse type semiconductor lasers of all groups).

As described above, according to the present invention, desired various output waveforms can be obtained while the capability of semiconductor laser used as an excitation source is brought into fill play. Also, by using the present invention, the industrial usability of the solid-state laser oscillator excited by semiconductor laser can be enhanced.

## Claims

1. A semiconductor-excitation solid-state laser oscillating device comprising:
a solid-state laser medium arranged in an optical resonator;
an excitation light source for exciting said laser medium, said excitation light source including semiconductor lasers divided into a plurality of groups;
a controller for controlling said excitation light source so that on/off timing of the excitation light from the semiconductor lasers in at least one group is different from on/off timing of the semiconductor lasers in another group so as to obtain a laser output having a predetermined waveform from said solid-state laser medium.

2. A semiconductor-excitation solid-state laser oscillating device according to claim 1, wherein all the semiconductor lasers in said plurality of groups are of pulse type.

3. A semiconductor-excitation solid-state laser oscillating device according to claim 2, wherein the semiconductor lasers in each group have the same maximum driving current, the same maximum pulse width and the same maximum duty cycle.

4. A semiconductor-excitation solid-state laser oscillating device according to claim 1, 2 or 3, wherein said controller controls driving current, pulse width and repetition frequency of the semiconductor lasers in at least two width and repetition frequency of the semiconductor lasers in at least two groups independently with respect to respective groups to determine leading edges of pulses of the excitation light.

5. A semiconductor-excitation solid-state laser oscillating device according to claim 4, wherein N (N≥2) groups of semiconductor lasers having pulse width of ΔT are provided and said controller controls semiconductor lasers in n-th (2≤n≤N) group so that on-timing of the semiconductor lasers in the n-th group delays substantially by nΔT with respect to on-timing of the semiconductor lasers in the first group.

6. A semiconductor-excitation solid-state laser oscillating device according to claim 1, wherein the semiconductor lasers in at least one group are of continuous-output type and the semiconductor lasers in the remaining groups are of pulse type.

7. A semiconductor-excitation solid-state laser oscillating device according to claim 6, wherein the semiconductor lasers in said at least one group have the same maximum driving current, and the semiconductor lasers in said remaining groups have the same maximum driving current, the same pulse width and the same maximum duty cycle.

8. A semiconductor-excitation solid-state laser oscillating device according to claim 6 or 7, wherein the semiconductor lasers in at least two groups are of pulse type, and said controller controls driving current, pulse width and repetition frequency of the pulse-type semiconductor lasers in at least two groups independently with respect to respective groups to determine leading edges of pulses of the excitation light.

9. A semiconductor-excitation solid-state laser oscillating device according to claim 8, wherein N (N≥2) groups of pulse-type semiconductor lasers having pulse width of ΔT are provided and said controller controls pulse-type semiconductor lasers in n-th (2≤n≤N) group so that on-timing of the pulse-type semiconductor lasers in the n-th group delays substantially by nΔT with respect to on-timing of pulse-type semiconductor lasers in the first group.
